# EUROPÄISCHE PATENTSCHRIFT

(11) **EP 2 460 858 B1**
(45) Veröffentlichungstag und Bekanntmachung des Hinweises auf die Patenterteilung: **22.01.2014**
(21) Anmeldenummer: 10193510.4
(22) Anmeldetag: 02.12.2010
(51) Int. Cl.: C08L 77/06, C08G 69/26

(54) **Polyamidformmassen auf Basis von Mischungen aus transparenten Copolyamiden und aliphatischen Homopolyamiden zur Herstellung von transparenten Formteilen**
Polyamide moulding material on the basis of mixtures of transparent copolyamides and aliphatic homopolyamides for producing transparent moulded parts
Masses de formage polyamides à base de mélanges de copolyamides transparents et d'homopolyamides aliphatiques pour la fabrication de pièces de formage transparentes

(43) Veröffentlichungstag der Anmeldung: 06.06.2012
(73) Patentinhaber: EMS-Patent AG, 7013 Domat/Ems (CH)
(72) Erfinder: Bühler, Friedrich Severin, 7430 Thusis (CH); Bass, Sepp, 7013 Domat/Ems (CH)
(74) Vertreter: Bremi, Tobias Hans

(56) Entgegenhaltungen:
- WO-A2-2009/132989

## Beschreibung

### TECHNISCHES GEBIET

Die vorliegende Erfindung betrifft neue Polyamidformmassen, die sich durch eine deutlich bessere Verarbeitbarkeit, insbesondere im Spritzguss, gute Chemikalienresistenz, sehr gute Transparenz und geringen Haze auszeichnen.

### STAND DER TECHNIK

Aus der WO-A-2009/132989 sind transparente Copolyamide auf Basis von nachwachsenden Rohstoffen bekannt, die in einem definierten Klimatest (55°C/95% rel. Feuchte) geringen Verzug zeigen. Die Copolyamide werden aus cycloaliphatischen und aliphatischen Diaminen sowie aliphatischen Disäuren hergestellt. Der Haze und die Transparenz dieser Copolyamide ist gut, der Haze kann aber z.B. bei Lagerung in Alkoholen zunehmen, so dass diese Copolyamide eine zu geringe chemische Beständigkeit aufweisen. In den Beispielen werden nur die Copolyamide allein dargestellt, in der allgemeinen Beschreibung wird generell auf die Möglichkeit hingewiesen, weitere Polymere beizumischen, ohne aber spezifische solche Systeme in Kombination mit Anteilen in einer solchen Mischung zu offenbaren.

Die DE 100 09 756 A1 beschreibt Polyamid-Mischungen mit verbesserter Transparenz und Chemikalienbeständigkeit ohne Einbußen in den mechanischen Eigenschaften. Die Mischungen bestehen aus amorphen oder mikrokristallinen Polyamiden und aus teilkristallinen Polyamiden sowie zwei verschiedenen Phosphoradditiven. Die für das amorphe oder mikrokristalline Polyamid angegebene Formel ermöglicht eine große Vielfalt an Kombinationsmöglichkeiten von Diaminen und aliphatischen Dicarbonsäuren als Ausgangskomponenten. Eine spezifische Kombination zweier unterschiedlicher Diamine, oder zweier unterschiedlicher Disäuren wird jedoch nicht beschrieben. In den Beispielen werden amorphe Polyamide auf Basis immer nur eines Diamins, dem Bis-(4-amino-3-methyl-cyclohexyl)-methan (MACM), in Kombination mit einer aromatischen Dicarbonsäure, der Isophthalsäure (IPS), und Lactam-12 dargestellt.

### DARSTELLUNG DER ERFINDUNG

Die Erfindung betrifft, wie oben erläutert, neue Polyamidformmassen, die sich durch eine im Vergleich zu den Materialien des Standes der Technik deutlich bessere Verarbeitbarkeit, insbesondere im Spritzguss, bei guter Chemikalienresistenz, sehr guter Transparenz und geringem Haze, auszeichnen.

Die Erfindung betrifft daher insbesondere neue Formmassen auf der Basis von Mischungen aus transparenten Copolyamiden und speziellen teilkristallinen, aliphatischen Homopolyamiden, die zur Herstellung von transparenten Formteilen, insbesondere Spritzgussformteilen mit hohen technischen Anforderungen und hochwertigen Oberflächen, insbesondere im Sichtbereich, eingesetzt werden. Unter Homopolyamiden sind dabei wie üblich Polyamid-Systeme zu verstehen, die auf Basis nur eines Lactams, respektive nur eines Disäure-Monomers und eines Diamin-Momomers, beruhen, und dieser Begriff schliesst damit nicht nur Systeme wie z.B. PA12 ein, sondern auch Systeme wie z.B. PA1012. Die erfindungsgemässen Formmassen zeichnen sich weiter durch hohe Zähigkeit, niedrige Wasseraufnahme und gute Chemikalienbeständigkeit aus. Die vorliegende Erfindung betrifft zudem Verfahren zur Herstellung solcher Polyamidformmassen und aus den Formmassen hergestellte Formteile, wie z. B. Gehäuse-oder Displaymaterial für Mobiltelefone, GPS-Geräte, MP3-Player, Brillen, Linsen, Kameras, optische Geräte und Ferngläser etc.

Hochwertige Oberflächen werden als Unterstützung einer "High End Quality" Positionierung von Autoausstattungen, Haushaltsgeräten, Unterhaltungselektronik, Sportgeräten und leicht zu reinigenden Industrie-Oberflächen eingesetzt. Dazu werden hohe Ansprüche an den Werkstoff gestellt, der neben dem hochwertigen Aussehen bruchsicher, fließfähig, dehnfähig und verzugsarm sein muss. Das erfordert geringe Volumenänderungen durch Kristallisation und geringe Feuchtigkeitsaufnahme. Ferner wird eine ausgezeichnete Abriebfestigkeit und dynamische Belastbarkeit verlangt, was typische Eigenschaften von dehnfähigen Polyamiden sind. Formteile aus den erfindungsgemässen Polyamidformmassen besitzen eine ausgezeichnete Transparenz, Zähigkeit und Abriebfestigkeit Insbesondere die hohe chemische Resistenz und hohe Belastbarkeit bei Wechselbiegebeanspruchung erlauben diesen Formteilen Einsätze in robuster Umgebung. Die erfindungsgemässen Formmassen können auf bekannten Verarbeitangsanlagen nach bekannten Verfahren zu hochwertigen Formteilen verarbeitet werden. Hochwertige Formteile können, wie schon oben erläutert, als Gehäuse- oder Displaymaterial für Mobiltelefone, GPS-Geräte, MP3-Player, Brillen, Linsen, Kameras, optische Geräte, Ferngläser etc. eingesetzt werden.

Der Erfindung liegt demnach u.a. die Aufgabe zugrunde, Formmassen auf Basis von Mischungen aus transparenten Copolyamiden und teilkristallinen, aliphatischen Polyamiden bereit zu stellen, die zur Herstellung von transparenten Formteilen mit hohen technischen Anforderungen und hochwertigen Oberflächen ("High End Quality"), insbesondere im Sichtbereich, eingesetzt werden können, die aber nicht die für die Verarbeitung unvorteilhaft hohen Glasübergangstemperaturen der bekannten transparenten Homopolyamide aufweisen. Die Formmassen sollen sich durch hohe Zähigkeit, niedrige Wasseraufnahme, gute Chemikalienbeständigkeit, insbesondere gegenüber Alkoholen, und eine verbesserte Verarbeitbarkeit, insbesondere im Spritzguss, auszeichnen.

Spezifisch betrifft die vorliegende Erfindung also eine Polyamidformnzasse auf Basis einer Mischung aus transparenten Copolyamiden und teilkristallinen, aliphatischen Polyamiden zur Herstellung von transparenten Formteilen, insbesondere von Spritzgussformteilen mit hoher Zähigkeit, niedriger Wasseraufnahme und guter Chemikalienbeständigkeit.

Dabei besteht die Formmasse aus folgenden Komponenten (A) - (C) mit folgender Zusammensetzung:
(A) 25 bis 75 Gew.% mindestens eines transparenten Copolyamids, aufgebaut aus
   (a) 50 bis 90 Mol-% eines cycloaliphatischen Diamins ausgewählt aus der Gruppe bestehend aus: Bis-(4-amino-3-methyl-cyclohexyl)-methan (MACM), Bis-(4-amino-cyclohexyl)-methan (PACM oder Mischungen davon und
   (b) 10 bis 50 Mol-% eines unverzweigten, aliphatischen Diamins ausgewählt aus der Gruppe bestehend aus: 1,10-Decandiamin und 1,12-Dodecandiamin oder Mischungen davon,
      jeweils bezogen auf die Gesamtmenge an Diaminen sowie
   (c) aus einer oder mehreren aliphatischen Dicarbonsäure ausgewählt aus der Gruppe bestehend aus: Sebacinsäure und Dodecandisäure,
(B) 25 bis 75 Gew.-% mindestens eines weiteren Polyamids ausgewählt aus der Gruppe bestehend aus: PA1010, PA1012, PA1212 sowie Mischungen davon,
(C) 0 bis 10 Gew.% Additive, ausgewählt aus der Gruppe bestehend aus: UV-Stabilisatoren, Hitzestabilisatoren, Radikalfänger, Verarbeitungshilfsstoffe, Einschlussverhinderer, Gleitmittel, Entformungshilfsstoffe, Weichmacher, funktionelle Additiven zur Beeinflussung der optischen Eigenschaften, insbesondere des Brechungsindexes, Schlagzähmodifikatoren, Füllstoffe wie insbesondere nanoskalige Füll- und/oder Zuschlagsstoffe, optische Aufheller, Farbstoffe, etc. oder Mischungen davon,
wobei die Summe der Komponenten (A), (B) und (C) 100 Gew.-% ergibt

Da im Hinblick auf das Eigenschaftsspektrum und der angestrebten Anwendungen der transparenten Polymermischungen bzw. der daraus gefertigten transparenten Formkörper die Transparenz und der Haze im Vordergrund stehen, wurde untenstehend die Beurteilung der Chemikalienbeständigkeit anhand der nach Lagerung in verschiedenen Medien verbleibenden Eigenschaften Transparenz und Haze vorgenommen. Dazu werden durch Spritzguss gefertigte Formkörper der Dimension 100 x 100 x 2 mm bei Raumtemperatur für 60 Minuten in verschiedenen Medien gelagert. Nach 12 h Trocknung bei RT wird die Transparenz und der Haze gemäss ASTM D1003 bestimmt Dabei zeigt es sich, dass Komponente A für sich oder in Abmischung mit kleinen Mengen von bis 20 Gew.-% an Komponente B nach Lagerung in Alkohol oder alhoholhaltigen Testbenzinen (z.B E85) sehr stark eintrübt. Dagegen ist Komponente B allein oder Mischungen von B mit kleinen Mengen (bis ca. 20 Gew.-%) an Komponente A bereits ohne Kontakt zu Alkoholen ungenügend transparent für die genannten Anwendungen und besitzt einen unakzeptabel hohen Haze. Überraschend besitzen nur genau Mischungen aus 25 - 75 Gew.-% Komponente A und 75 - 25 Gew.-% Komponente B überragende Transparenz- und Hazewerte, die auch bei Lagerung in Alkoholen oder alkoholhaltigen Lösungsmitteln, nicht oder nur unwesentlich beeinträchtigt werden.

Die Transparenz einer aus der transparenten Formmasse hergestellten Platte mit Dicke von 2mm, gemessen als Lichttransmission gemäß ASTM D1003, beträgt bevorzugt über 85%, insbesondere bevorzugt mindestens 90% und der Haze (Trübung) bevorzugtermassen maximal 15%, insbesondere bevorzugt maximal 12%. Für die angestrebte Verwendung der erfindungsgemässen Formmassen werden Steifigkeiten (Zug-E-Modul größer 1300 MPa) und hohe Zähigkeiten (bevorzugtermassen Schlagzähigkeit bei 23°C und -30°C: ohne Bruch) erzielt. Weiterhin wird eine gute Chemikalienbeständigkeit, insbesondere in Kontakt mit Alkoholen mit den aus den erfindungsgemässen Formmassen hergestellten Formkörper erzielt.

Als Komponente (B) wird ein teilkristallines, aliphatisches Polyamid ausgewählt aus der Gruppe bestehend aus PA1010, PA1012 und PA1212 eingesetzt, wobei insbesondere PA1010 bevorzugt ist.

Die aliphatischen Polyamide der Komponente (B) haben gemäß einer weiteren bevorzugten Ausführungsform eine Lösungsviskosität ηᵣₑ₁ im Bereich von 1.4 bis 2.4, bevorzugt von 1.6 bis 2.2 und insbesondere von 1.7 bis 2.0. Diese Werte gelten gemessen in einer Lösung von 0.5 g Polymer in 100 ml m-Kresol bei 20 °C.

In einer weiteren bevorzugten Ausführungsform setzt sich die Polymermischung aus 30 bis 70 Gew.-%, besonders bevorzugt 35- 65 Gew.-% der Komponente (A) und 70 bis 30 Gew.-%, besonders bevorzugt 65 - 35-Gew.-% der Komponente (B), zusammen. Das weitere Polyamid der Komponente (B) liegt also bevorzugtermassen in einem Anteil im Bereich von 30-70 Gew.-% vorliegt, bevorzugt im Bereich von 35-65 Gew.-%, insbesondere bevorzugt im Bereich von 40-65 Gew.%.

Überraschenderweise wurde insbesondere festgestellt, dass Mischungen aus den transparenten Copolyamiden MACM 10-12 / 10 10-12 und den teilkristallinen, aliphatischen Polyamiden PAXY, insbesondere den Polyamiden PA1010, PA1012 und PA1212, die gewünschten Eigenschaften aufweisen. Beispielsweise haben die Mischungen aus dem Copolyamid MACM10/1010 mit einem MACM10-Anteil von 66 Mol-% und dem Polyamid PA1010 über den gesamten Zusammensetzungsbereich (30 bis 70 Gew.-% Komponente B) eine Transparenz von über 91% und einen Haze, gemessen an Platten der Dicke 2mm, von maximal 11%. Die Transmissions- und Hazewerte übertreffen erstaunlicherweise in einem weiten Bereich der Zusammensetzung sogar diejenigen Werte der reinen Komponente (A). Der Glanz, gemessen unter einem Winkel von 20°, erreicht Höchstwerte mit ca. 150%. In hochtransparenten Materialien steigen die Glanzwerte über 100%, da die untere Oberfläche ebenfalls Licht reflektiert, das zur oberen Oberfläche hinzuaddiert wird.

Der Wert der Lichttransmission, welche als Maß für die Transparenz verwendet wird, ist dabei im Rahmen der vorliegenden Anmeldung stets als bestimmt nach der Methode ASTM D1003 (Lichtart CIE-C) zu verstehen. Die Messung der Lichttransmission wurde dabei in den unten angeführten Experimenten auf einem Gerät mit dem Namen Haze Guard Plus der Firma BYK Gardner (DE) an Rundplatten 70 x 2mm oder Platten der Dimension 60 x 60 x 2mm durchgeführt. Der Transmissionswert wird für den sichtbaren Wellenlängenbereich definiert nach CIE-C d. h. mit wesentlichen Intensitäten ca. zwischen 400 und 770nm, angegeben. Die Rundplatten 70 x 2mm werden z. B. dafür auf einer Arburg Spritzgussmaschine im polierten Werkzeug hergestellt, wobei die Zylindertemperatur zwischen 200°C und 340°C und die Werkzeugtemperatur zwischen 20°C und 140°C liegt.

Die erfindungsgemässen transparenten Mischungen aus transparenten Copolyamiden und teilkristallinen, aliphatischen Polyamiden, sowie daraus hergestellte Formteile, weisen somit bevorzugtermassen die hier definierte Lichttransmission auf und besitzen eine mikrokristalline Morphologie. Bevorzugtermassen handelt es sich bei den erfindungsgemässen Polymermischungen um Polyamid-Systeme, welche, in hochmolekularer Form und ohne weitere Bestandteile verarbeitet, transparente Formteile ergeben, d. h. die Dimension der Kristallite ist unterhalb der Wellenlänge des sichtbaren Lichtes.

Im übrigen sind die erfindungsgemäss eingesetzten MACM-, PACM -basierten Copolyamide sowie die daraus hergestellten erfindungsgemässen Polymermischungen bevorzugtermassen über den gesamten beanspruchten Zusammensetzungsbereich hochtransparent und weisen nur geringen Haze auf. Spezifisch ist unter einer solchen hohen Transparenz und einem geringen Haze der Polyamidformmasse zu verstehen, dass die Transparenz einer aus der transparenten Formmasse hergestellten Platte mit Dicke von 2mm, gemessen als Lichttransmission gemäß ASTM D1003, wie oben erwähnt, bevorzugt über 85%, insbesondere bevorzugt mindestens 90% beträgt, und der Haze (Trübung) bevorzugtermassen maximal 15%, insbesondere bevorzugt maximal 12% beträgt. Die erfindungsgemässen Polyamidformmassen zeichnen sich nicht nur durch eine überragende Transparenz und geringe Trübheit (Haze) aus, sondern auch dadurch, dass Transparenz und Haze bei Kontakt mit Alkoholen nicht oder nur wenig verschlechtert werden. Erfindungsgemäss ist der Haze nach einstündiger Lagerung in Alkoholen nicht höher als 15%, bevorzugt nicht höher als 12% und ganz besonders bevorzugt nicht höher als 5%. Somit ist die Änderung der Hazewerte (ΔHaze) durch einstündige Lagerung in Alkoholen nicht grösser als 10%, bevorzugt nicht grösser als 6% und ganz besonders bevorzugt nicht grösser als 3%. ΔHaze entspricht der Differenz der Hazewerte eines Formteils, gemessen vor und nach einstündiger Lagerung in Alkohol oder einem Gemisch eines Lösungsmittels mit Alkohol (z.B. E85) bei Raumtemperatur.

Gemäß einer weiteren bevorzugten Ausführungsform der Polyamidformmasse ist diese dadurch gekennzeichnet, dass die Konzentration der cycloaliphatischen Diamine der Komponente (A) in einem Bereich von 50 bis 80 Mol-%, insbesondere im Bereich von 55 bis 75 Mol-%, bezogen auf den Gesamtdiamingehalt, liegt, und das unverzweigte, aliphatische Diamin in einer Konzentration von 25 bis 40 Mol-%, bezogen auf den Gesamtdiamingehalt, eingesetzt ist.

Bei Komponente (A) handelt es sich bevorzugtermassen um ein transparente Copolyamide mit einer Glasübergangstemperatur (T_{g}) von wenigstens 80°C oder insbesondere wenigstens 85 °C, und höchstens 150°C, aufgebaut aus mindestens zwei voneinander verschiedenen Diaminen und mindestens einer aliphatischen Dicarbonsäure. Bei den Diaminen handelt es sich um eine Mischung aus cycloaliphatischen und unverzweigten, aliphatischen Diaminen. Die cycloaliphatischen Diamine (Bestandteil (a) innerhalb der Komponente (A)) sind ausgewählt aus der Gruppe bestehend aus: Bis-(4-amino-3-methyl-cyclohexyl)-methan (MACM), Bis-(4-amino-cyclohexyl)-methan (PACM), während die unverzweigten aliphatischen Diamine (Bestandteil (b) innerhalb der Komponente (A)) ausgewählt sind aus der Gruppe: 1,10-Decandiamin, 1,12-Dodecandiamin.

Damit die erfindungsgemäss verwendeten transparenten Copolyamide die geforderten Eigenschaften besitzen, sollte bevorzugtermassen also die Konzentration der cycloaliphatischen Diamine (Bestandteil (a) innerhalb Komponente (A)) in einem Konzentrationsbereich von 50 bis 80 Mol-%, insbesondere bevorzugt im Bereich von 55 bis 75 Mol-% bezogen auf den Gesamtdiamingehalt, liegen.

Die Konzentration an aliphatischem Diamin (Bestandteil (b) innerhalb Komponente (A)), insbesondere wie in der Hauptsache bevorzugt ausgewählt als 1,10-Decandiamin, beträgt erfindungsgemäss immer mindestens 10 Mol-%, bevorzugtermassen aber mindestens 20 Mol-%, insbesondere bevorzugt mindestens 32 Mol-%, bezogen auf den Gesamtdiamingehalt und liegt bevorzugt also in einem Bereich von 20 bis 50 Mol-%, besonders bevorzugt in einem Bereich von 25 bis 45 Mol-%, bezogen auf den Gesamtdiamingehalt.

Gemäß einer weiteren bevorzugten Ausführungsform weist das Copolyamid (A) eine Glasübergangstemperatur von 90°C bis 135°C, besonders bevorzugt von wenigstens 100°C bis 135°C auf. Das Copolyamid (A) weist eine Glasübergangstemperatur (Tg) von wenigstens 80°C, bevorzugt von wenigstens 85°C, insbesondere von wenigstens 90°C oder 100°C auf. Andererseits hat das Copolyamid (A) eine Glasübergangstemperatur (Tg) von höchstens 150°C, bevorzugt von höchstens 135°C und besonders bevorzugt von höchstens 125°C. Damit weist Komponente (A) eine bevorzugte Glasübergangstemperatur (Tg) im Bereich von 80 bis 133°C, insbesondere im Bereich von 85 bis 125°C auf.

Der Tg-Bereich von Komponente A wird durch Zumischen von Komponente B weiter abgelenkt Durch die Reduktion der Glasübergangstemperatur (T_{g}), im Vergleich zu Homopolyamiden auf Basis cycloaliphatischer Diamine, wie z.B. MACM10, wird erfindungsgemäss eine höhere Fliessfähigkeit der Polymerschmelze und damit eine bessere Verarbeitbarkeit erzielt Da die erfindungsgemässen Polyamidformmassen weniger rasch erstarren (als Homopolyamidformmassen) werden im Spritzguss durch Vermeiden von Fließlinien oder sonstigen Artefakten eine qualitativ bessere Oberfläche (glattere Oberfläche) und höhere Bindenahtfestigkeiten erreicht. Darüber hinaus lassen sich die erfindungsgemässen Polymermischungen schonender, also bei 10°C bis 40°C tieferen Temperaturen herstellen und verarbeiten, so dass daraus gefertigte Formteile deutlich weniger Einschlüsse (von der Polykondensation herrührend) und Verfärbungen aufweisen, was insbesondere für transparente Werkstoffe und deren Anwendungen im optischen Bereich von herausragender Bedeutung ist

Gemäß einer weiteren bevorzugten Ausführungsform wird eine Mischung aus 60 bis 90 Mol-% Bis-(4-amino-3-methyl-cyclohexyl)-methan (MACM) und/oder Bis-(4-aminocyclohexyl)-methan (PACM) und 10 bis 40 Mol-% mindestens eines aliphatischen Diamins mit mit 10 bis 12 Kohlenstoffatomen, insbesondere Decandiamin (bevorzugtermassen 1,10-Decandiamin), jeweils bezogen auf die Gesamtmenge an Diaminen, verwendet. Bevorzugt werden erfindungsgemäss die aliphatischen Diamine 1,14-Decandiamin und 1,12-Dodecandiamin eingesetzt, wobei besonders bevorzugt als aliphatisches Diamin 1,10-Decandiamin, zu mindestens 20, oder mindestens 30 Mol-% bezogen auf den Gesamtgehalt an aliphatischem Diaminen, verwendet wird.

Die aliphatischen Dicarbonsäuren haben bevorzugt 10 bis 18 Kohlenstoffatorne, insbesondere 10 bis 14 Kohlenstoffatome.

Bevorzugt wird als aliphatische Disäure (Bestandteil (c) innerhalb von Komponente (A)) eine Säure, ausgewählt aus der Gruppe, bestehend aus Sebacinsäure, Dodecandisäureund Gemischen daraus, wobei insbesondere die aliphatische Disäure zu mindestens 20 Mol-%, bevorzugt zu mindestens 30 Mol-%, besonders bevorzugt zu mindestens 50 Mol-% aus Sebacinsäure, bezogen auf die Gesamtmenge an Disäuren, besteht, wobei ganz besonders bevorzugt die aliphatische Disäure ausschließlich Sebacinsäure ist, eingesetzt. Erfindungsgemäss besonders bevorzugte Copolyamide (A) sind daher MACM10/1010, MACM12/1012. Das Diamin MACM kann ganz oder teilweise durch PACM, ersetzt sein. Bevorzugt wird MACM ganz oder teilweise durch PACM ersetzt, d.h. ebenfalls besonders bevorzugt sind folgende Systeme: PACM10/1010, PACM12/1012, respektive Mischungen davon.

Eine besonders bevorzugte Ausführungsform ist dadurch gekennzeichnet, dass das Copolyamid (A) MACM10/1010 ist und die Komponente (B) PA1010 ist.

Die erfindungsgemässen Polyamidformmassen enthalten bevorzugt: 35 bis 70 Gew.% Komponente (A), 30 bis 65 Gew.-% Komponente (B), 0 bis 5 Gew.-% Komponente (C), Besonders bevorzugt enthalten die Formmassen die Komponenten in folgenden Proportionen: 40 bis 65 Gew.-% Komponente (A), 35 bis 60 Gew.-% Komponente (B), 0 bis 3 Gew.-% Komponente (C).

Die erfindungsgemässen Polyamidformmassen auf Basis von Mischungen aus transparenten Copolyamiden und teilkristallinen, aliphatischen Polyamiden können überwiegend auf Monomeren basieren, die aus nachwachsenden oder erneuerbaren Rohstoffen zugänglich sind und wobei der Bioanteil nach ASTM D6866-068a von Copolyamid (A) und/oder der weiteren Komponente (B) mindestens 50 Gew.-%, insbesondere zwischen 50 und 85 Gew.% beträgt.

Die erfindungsgemässen Polyamidformmassen können aber die üblichen Additive (Komponente C) in den üblicherweise geringen Anteilen (weniger als 10 Gew.-%, bevorzugtermaßen weniger als 5 Gew.-%, insbesondere bevorzugt weniger als 3 Gew.-%) aufweisen. Bei den genannten Additiven kann es sich um Stabilisatoren wie UV-Stabilisatoren, Hitzestabilisatoren, Radikalfänger und/oder um Verarbeitungshilfsstoffe, Einschlussverhinderer, Gleitmittel, Entformungshilfsstoffe, Weichmacher und/oder um funktionelle Additive bevorzugt zur Beeinflussung optischer Eigenschaften wie insbesondere des Brechungsindexes oder um Kombinationen oder Mischungen davon handeln. Des Weiteren können die Formmassen (als Komponente C) nanoskalige Füll-und/oder Funktionsstoffe, wie z. B. Schichtmineralien oder Metalloxide, die den Brechungsindex erhöhen, oder optische Aufheller oder Farbstoffe, wie z. B. photochrome Farbstoffe beinhalten.

Im Sinne der Erfindung können die Formmassen außerdem dem Fachmann geläufige Füll-und/oder Zuschlagstoffe, beispielsweise Glasfasern, Glaskugeln, Carbonfasern, Russ, Graphit, Flammschutzmittel, Mineral wie zum Beispiel Titandioxid, Calciumcarbonat oder Bariumsulfat, oder beispielsweise Schlagzähmodifikatoren, wie funktionalisierte Polyolefine, enthalten.

Bevorzugte Schlagzähmodifikatoren stammen aus der Gruppe, ausgewählt aus säuremodifizierten Ethylen-α-Olefin-Copolymeren, Ethylen-Glycidylmethacrylsäure-Copolymeren und Methacrylat-Butadien-Styrol-Copolymeren.

Den erfindungsgemässen Formmassen können also auch Füll- oder Verstärkungsmittel zugegeben werden. In diesem Fall sind die aus den Formmassen hergestellten Formteile natürlich nicht notwendigerweise transparent. Neben Glas- und Kohlenstofffasern können als Verstärkungsmittel besonders solche auf Basis von nachwachsenden Rohstoffen und Bioanteilen über 50% eingesetzt werden. Besonders bevorzugt werden Naturfasern, wie z. B. Cellulose-, Hanf-, Flachs-, Baumwoll-, Woll- oder Holzfasern eingesetzt.

Die Herstellung der Polymerkomponenten (A) und (B) erfolgt in bekannten Druckgefäßen. Zunächst wird eine Druckphase bei 250°C bis 320°C gefahren. Danach folgt die Entspannung bei 250°C bis 320°C. Die Entgasung wird bei 260°C bis 320°C durchgeführt. Anschließend wird die Polyamidformmasse in Strangform ausgetragen, im Wasserbad auf 5°C bis 80°C gekühlt und granuliert. Das Granulat wird 12 Stunden bei 80°C auf einen Wassergehalt unter 0,06% getrocknet. Während der Trocknung mit gleichzeitiger Umwälzung des Granulates können Additive wie Gleitmittel, Farbstoffe, Stabilisatoren oder andere auf das Granulat aufgetragen oder aufgesintert werden.

Zur Einstellung der gewünschten relativen Viskosität (Komponenten (A), (B)), gemessen in einer Lösung von 0,5 g Polymer in 100 ml m-Kresol bei 20°C, von 1,40 bis 2,40, bevorzugt 1,6 bis 2,20 und insbesondere bevorzugt von 1,70 bis 2,00 können entweder das Diamin oder die Dicarbonsäuren in geringem Überschuss von 0,01 bis 2 Mol-% eingesetzt werden. Bevorzugt wird die Regelung mit Monoamin oder Monocarbonsäuren von 0,01 bis 2,0 Gew.-%, bevorzugt 0,05 bis 0,5 Gew.-% durchgeführt. Geeignete Regler sind Benzoesäure, Essigsäure, Propionsäure, Stearylamin oder deren Mischungen. Besonders bevorzugt sind Regler mit Amin- oder Carbonsäuregruppen, die zusätzlich Stabilisatorgruppen des Typs HALS oder des Typs tert-Butyl-Phenol enthalten, wie beispielsweise Triacetondiamin oder Isophthalsäure-Di-Triacetondiamin-Derivate. Geeignete Katalysatoren zur Beschleunigung der Polykondensationsreaktion sind phosphorhaltige Säuren, wie beispielsweise H₃PO₂, H₃PO₃, H₃PO₄, deren Salze oder organischen Derivate, die gleichzeitig eine Reduzierung der Verfärbung während der Verarbeitung bewirken. Die Katalysatoren werden im Bereich von 0,01 bis 0,5 Gew.-%, bevorzugt im Bereich von 0,03 bis 0,1 Gew.-% zugegeben. Geeignete Entschäumer zur Vermeidung der Schaumbildung während der Entgasung sind wässrige Emulsionen, die Silicone oder Siliconderivate im Bereich von 0,01 bis 1,0 Gew.%, bevorzugt im Bereich von 0,01 bis 0,10 bei 10%iger Emulsion enthalten.

Geeignete Hitze- oder UV-Stabilisatoren können bereits vor der Polykondensation dem Ansatz in Mengen von 0,01 bis 0,5 Gew.-% zugegeben werden. Bevorzugt werden hochschmelzende Typen eingesetzt. Besonders bevorzugt wird Irganox 1098 verwendet. Die Ausrüstung der erfindungsgemässen, transparenten Formmassen mit Additiven wie beispielsweise Stabilisatoren, Gleitmittel wie beispielsweise Paraffinöle oder Stearate, Farbstoffe, Füllstoffe, Schlagzähmodifikatoren wie beispielsweise Terpolymere aus Ethylen-Glycidyl-Methacrylat, bevorzugt mit einem Brechungsindex im Bereich der erfindungsgemässen Formmassen oder Maleinsäureanhydrid gepfropfte Polyethylene, Propylene oder Verstärkungsstoffe wie beispielsweise transparent dispergierbare Nano-Partikel oder Glaskugeln oder Glasfasern, oder Mischungen der Additive, kann durch bekannte Mischverfahren, insbesondere Extrusion auf Ein- oder Mehrwellenextrudern mit Massetemperaturen zwischen 250°C bis 350°C, erfolgen.

Die vorliegende Erfindung betrifft zudem ein Verfahren zur Herstellung von solchen Polyamidformmassen, und die oben genannte Aufgabe wird weiterhin gelöst durch das beanspruchte Verfahren zur Herstellung solcher Polyamidformmassen. Dabei erfolgt bevorzugtermassen die Herstellung der Polymerkomponenten (A) und (B) in bekannten Druckgefäßen, mit einer Druckphase bei 250°C bis 320°C mit einer nachfolgenden Entspannung bei 250°C bis 320°C, mit einer nachfolgenden Entgasung bei 260°C bis 320°C sowie Austragen der Polyamidformmassen in Strangform, Abkühlen, Granulieren und Trocknen des Granulats, Compoundieren der Komponenten (A) und (B), und gegebenenfalls (C) als Granulat und Formen in einem Extruder bei Massetemperaturen von 220°C bis 350°C zu einem Strang, Schneiden mit geeigneten Granulatoren zu Pellets, wobei während der Compoundierung Additive zugegeben werden können, die zur Ausrüstung der Formmasse erwünscht sind, wie z. B. Verarbeitungsstabilisatoren, Farbpigmente, UV-Absorber, Hitzestabilisatoren, Flammschutzmittel und andere transparente Polyamide.

Geeignete Verfahren zur Herstellung hochtransparenter Formteile aus den erfindungsgemässen, transparenten Polyamidformmassen sind also Spritzgießverfahren oder Spritzprägeverfahren bei Massetemperaturen von 230°C bis 320°C, wobei das Werkzeug mit Temperaturen von 40°C bis 130°C eingestellt wird und wobei gegebenenfalls das Werkzeug mit Temperaturen von 40°C bis 130°C nach dem Füllen der Kavität einen Prägedruck auf das heiße Formteil aufbringt. Besonders geeignete Verfahren zur Herstellung von fehlerfreien, spannungsarmen Oberflächen des Formteils aus den erfindungsgemässen, transparenten Polyamidformmassen, wie beispielsweise Linsen für Brillen oder hochwertige Gehäuseteile, ist ein Expansionsspritzprägeprozess, wobei Kavitäten mit Wandstärken von 1 bis 5mm gefüllt werden und anschließend die Werkzeugkavität bei permanenter Füllung auf höhere Wandstärken auseinander gefahren wird.

Geeignete Verfahren zur Herstellung von Folien, Rohren und Halbzeugen in Ein- oder Mehrschichtausführung aus den erfindungsgemässen, transparenten Polyamidformmassen sind Extrusionsverfahren auf Ein- oder Mehrwellenextrudern mit Massetemperaturen zwischen 250°C bis 350°C, wobei je nach Verträglichkeit der verschiedenen Schichten geeignete Haftvermittler in Form entsprechender Copolymere oder Blends eingesetzt werden können.

Formteile, die aus den erfindungsgemässen Polyamidformmassen aufgebaut sind, können miteinander nach üblichen Verfahren wie beispielsweise durch Ultraschallschweißen, Glühdrahtschweißen, Friktionsschweißen, Rotationsschweißen oder Laserschweißen durch Ausrüstung mit laseraktiven Farbstoffen mit Absorption im Bereich 800nm bis 2000nm, miteinander verbunden werden.

Geeignete Verfahren zur Herstellung von Hohlkörpern und Flaschen in Ein- oder Mehrschichtausführung aus den erfindungsgemässen, transparenten Polyamidformmassen sind Spritzblasverfahren, Spritzstreckblasverfahren und Extrusionsblasverfahren.

Die erfindungsgemässen Formmassen können auch zu Folien, wie z. B. Flachfolien, Blasfolien, Gießfolien, Mehrschichtfolien verarbeitet werden. Eine Weiterverarbeitung der Folien erfolgt bevorzugt durch Kaschieren, Hinterspritzen, Recken, Verstrecken, Bedrucken oder Färben.

Formteile können massegefärbt oder mittels sogenannter Tauchbäder nachträglich eingefärbt werden. Formteile werden gegebenenfalls durch Fräsen, Bohren, Schleifen, Lasermarkieren, -schneiden und/oder -schweißen bearbeitet.

Geeignete Verwendungen für Formteile, die aus den erfindungsgemässen, transparenten Polyamidformmassen aufgebaut sind, sind Schaugläser für Heizungstechnik mit direktem Ölkontakt, Filtertassen für Trinkwasseraufbereitung, Babyflaschen, Flaschen für Carbonisierung, Essgeschirr, Durchflussmesser für Gase oder flüssige Medien, Uhrengehäuse, Gehäuse für Armbanduhren, Lampengehäuse und Reflektoren für Autolampen. Des weiteren betrifft die vorliegende Erfindung also die beanspruchten Formteile aus derartigen Polyamidformmassen, die bevorzugtermassen dem oben angegebenen Verfahren hergestellt werden. Die oben genannte Aufgabe wird mit anderen Worten zudem gelöst durch derartige Formteile erhältlich aus den oben beschriebenen Polyamidformmassen, bevorzugtermassen hergestellt mittels Spritzgießverfahren und Spritzprägeverfahren bei Massetemperaturen von 230°C bis 320°C, wobei das Werkzeug mit Temperaturen von 40°C bis 130°C eingestellt wird und wobei gegebenenfalls das Werkzeug mit Temperaturen von 40°C bis 130°C nach dem Füllen der Kavität einen Prägedruck auf das heiße Formteil aufbringt.

Die aus den erfindungsgemässen, unverstärkten Formmassen hergestellten Formteile zeigen Steifigkeiten mit E-Moduli von 1300 bis 2000 MPa, bevorzugt mit E-Moduli von 1400 bis 1800 MPa. Die Prüfkörper zur Messung der Schlagwerte nach Charpy blieben bei Raumtemperatur (23°C) und bei -30°C ohne Bruch.

Bevorzugtermassen werden derartige Formteile also unter Verwendung von Spritzgießverfahren und Spritzprägeverfahren bei Massetemperaturen von 230°C bis 320°C hergestellt, wobei das Werkzeug mit Temperaturen von 40°C bis 130°C eingestellt wird und wobei gegebenenfalls das Werkzeug mit Temperaturen von 40°C bis 130°C nach dem Füllen der Kavität einen Prägedruck auf das heiße Formteil aufbringt.

Ein derartiges Formteil ist bevorzugtermassen gekennzeichnet durch eine Lichttransmission, gemessen nach ASTM D1003, bestimmt an Platten mit einer Dimension 2 x 60 x 60mm oder an Rundplatten der Dimension 2 x 70mm, bei einer Temperatur von 23°C, mit dem Messgerät Haze Gard Plus der Firma Byk Gardner mit der CIE Lichtart C, wobei die Lichttransmission wenigstens 85%, bevorzugt wenigstens 88% und besonders bevorzugt wenigstens 90% beträgt.

Weiterhin bevorzugtermassen ist ein derartiges Formteil gekennzeichnet durch eine Trübung (Haze) nach einstündiger Lagerung in Alkoholen, gemessen nach ASTM D1003, einer aus der transparenten Polyamidformmasse nach den Ansprüchen 1 bis 6 hergestellten Platte mit einer Dicke von 2mm von höchstens 15%, bevorzugt von höchstens 12% und ganz besonders bevorzugt von höchstens 5%.

Das Formteil kann unterschiedlichste Formen annehmen, beispielsweise als Folie, Rohr oder Halbzeugen, als Hohlkörper oder Flaschen etc. Insbesondere bevorzugtermassen handelt es sich bei einem derartigen Formteil um ein Gehäuse- oder Displayelement, so bevorzugtermassen um ein solches Element einer Maschine, eines Automobils, eines Haushaltsgerätes, oder eines insbesondere tragbaren elektrischen oder elektronischen Geräts, wie insbesondere eines Mobiltelefons, Computers, Laptops, GPS-Geräts, MP3-Players, Kamera, optischen Geräts oder Kombinationen davon handelt, oder es kann sich beim Formteil um ein Sportgerät, ein Brillengestell, ein Brillenglas, eine Linse, ein Fernglas oder Elemente davon handeln, sowie um die weiteren bereits oben erwähnten Bauteile.

Weitere Ausführungsformen sind in den abhängigen Ansprüchen angegeben.

### BESCHREIBUNG BEVORZUGTER AUSFÜHRUNGSFORMEN

Die Erfindung wird nun näher durch die folgenden Beispiele erläutert, ohne sie jedoch darauf zu beschränken.

### Beispiel B1: Transparentes Copolyamid MACM10/1010 (66:34)

Ein Druckautoklav mit 130 L Volumen wird mit 16.93 kg Bis-(4-amino-3-methylcyclohexyl)-methan, 6.30 kg Dekandiamin, 21.76 kg Sebazinsäure und 18 kg Wasser beschickt. Zunächst wird eine Druckphase bei 290°C gefahren. Danach folgt die Entspannung bei 280°C, woran sich die Entgasung bei gleicher Temperatur anschliesst. Ist das gewünschte Drehmoment erreicht, wird die Polyamidformmasse in Strangform ausgetragen, im Wasserbad gekühlt und granuliert. Das Granulat wird 12h bei 80°C auf einen Wassergehalt unter 0,06% getrocknet.

### Beispiele B2 bis B6 und Vergleichsbeispiele VB1 bis VB4

Zur Herstellung der Polymerblends B2 bis B6 sowie VB1 bis VB3 wird das Rohpolymer B1 entsprechend Tabelle 2 in einem Zweiwellenextruder der Firma Werner und Pfleiderer mit einem Schneckendurchmesser von 25 mm bei vorgegebenen Prozessparametern (Zylindertemperatur: 260°C, Schneckendrehzahl: 200 Upm, Durchsatz: 10 kg/h) compoundiert. Dazu werden alle Komponenten nach Tabelle 1 und 2 vorgemischt und über eine Waage in den Einzug des Zweiwellenextruders dosiert. Die Schmelze wird gegebenenfalls in Zone 10 durch einen Stickstoffstrom leicht entgast. Das Produkt wird als Strang aus einer Düse mit 3 mm Durchmesser abgezogen und granuliert. Das Granulat wird 24 Stunden bei 80°C im Vakuum von 30 mbar getrocknet.

Die Herstellung hochtransparenter Formteile bzw. Probekörper aus den erfindungsgemässen, transparenten Polyamidformmassen wurde auf einer Arburg 420C Allrounder 1000-250 Spritzgießmaschine bei Massetemperaturen von 230°C bis 280°C durchgeführt, wobei das Werkzeug auf die Temperatur von 40°C bzw. 60°C eingestellt wurde. Die Schneckendrehzahl betrug 150 bis 400 Upm.
Die entstandenen Materialien bzw. Formteile weisen die in Tabelle 1 und 2 aufgeführten Kenndaten auf.

**Tabelle 1**

| | Einheit | **B2** | **B3** | **B4** | **B5** |
|---|---|---|---|---|---|
| **Zusammensetzung** | | | | | |
| B1 (MACM10/1010) | Gew.-% | 69.3 | 59.3 | 49.3 | 39.3 |
| PA1010 | Gew.-% | 30.0 | 40.0 | 50.0 | 60.0 |
| Hitze und UV-Stabilisatoren | Gew.-% | 0.7 | 0.7 | 0.7 | 0.7 |
| | | | | | |
| **Eigenschaten** | | | | | |
| MVR (275°C/5kg) | ccm/ 10min | 30 | 30 | 26 | 26 |
| Glasübergangstemperatur (T_{g}) | °C | 82 | 70 | 63 | 54 |
| Schmelztemperatur | °C | 194 | 195 | 196 | 197 |
| Schmelzwärme | J/g | 19.2 | 31.3 | 43.8 | 49.3 |
| Relative Viskosität | - | 1.809 | 1.814 | 1.826 | 1.834 |
| Zug-E-Modul | MPa | 1600 | 1560 | 1520 | 1410 |
| Reissfestigkeit | MPa | 38 | 48 | 47 | 34 |
| Reissdehnung | % | 100 | 190 | 210 | 160 |
| Schlagzähigkeit Charpy 23°C | kJ/m² | oB | oB | oB | oB |
| Schlagzähigkeit Charpy -30°C | kJ/m² | oB | oB | oB | oB |
| Kerbschlagzähigkeit Charpy 23°C | kJ/m² | 9.5 | 9.2 | 9.5 | 10.6 |
| Lichttransmission nach ASTM D1003 | % | 93 | 93 | 93 | 93 |
| Gloss 20° | % | 151 | 151 | 153 | 151 |
| Gloss 60° | % | 146 | 145 | 148 | 140 |
| Fliesslänge | mm | 169 | 174 | 182 | 192 |
| **Haze nach ASTM D1003** | | | | | |
| vor Lagerung | % | 1.2 | 1.2 | 1.5 | 1.6 |
| nach Lagerung in Methanol | % | 3.6 | 2.3 | 1.5 | 1.5 |
| nach Lagerung in Ethanol | % | 9.8 | 1.5 | 1.5 | 1.6 |
| nach Lagerung in 2-Propanol | % | 2.9 | 2.2 | 1.4 | 1.7 |
| nach Lagerung in Spiritus | % | 9.3 | 1.2 | 1.6 | 1.6 |
| nach Lagerung in E85 | % | 4.4 | 1.4 | 1.5 | 1.5 |

**Tabelle 2**

| | Einheit | **B6** | **VB1** | **VB2** | **VB3** | **VB4** |
|---|---|---|---|---|---|---|
| **Zusammensetzung** | | | | | | |
| B1 (MACM10/1010) | Gew.-% | 29.3 | 99.3 | 79.3 | 19.3 | 9.3 |
| PA1010 | Gew.-% | 70.0 | 0 | 20.0 | 80.0 | 90.0 |
| Hitze und UV-Stabilisatoren | Gew.-% | 0.7 | 0.7 | 0.7 | 0.7 | 0.7 |
| | | | | | | |
| **Eigenschaften** | | | | | | |
| MVR (275°C/5kg) | ccm/ 10min | 31 | 32 | 32 | 28 | 33 |
| Glasübergangstemperatur (T_{g}) | °C | 46 | 114 | 92 | 35 | 30 |
| Schmelzpunkt | °C | 198 | - | 186 | 198 | 199 |
| Schmelzwärme | J/g | 55.9 | - | 3.1 | 60.6 | 66.9 |
| Relative Viskosität | - | 1.835 | 1.775 | 1.802 | 1.846 | 1.847 |
| Zug-E-Modul | MPa | 1430 | 1650 | 1630 | 1580 | 1690 |
| Reissfestigkeit | MPa | 45 | 52 | 54 | 45 | 38 |
| Reissdehnung | % | 210 | 150 | 190 | 190 | 150 |
| Schlagzähigkeit Charpy 23°C | kJ/m² | oB | oB | oB | oB | oB |
| Schlagzähigkeit Charpy -30°C | kJ/m² | oB | oB | oB | oB | oB |
| Kerbschlagzähigkeit Charpy 23°C | kJ/m² | 6.4 | 8.8 | 6.3 | 6.9 | 6.4 |
| Lichttransmission nach ASTM D1003 | % | 92 | 93 | 93 | 82 | 75 |
| Gloss 20° | % | 133 | 149 | 153 | 86 | 108 |
| Gloss 60° | % | 127 | 142 | 147 | 95 | 106 |
| Fliesslänge | mm | 196 | 160 | 163 | 210 | 225 |
| **Haze nach ASTM D1003** | | | | | | |
| vor Lagerung | % | 10 | 1.6 | 1.4 | 74 | 36 |
| nach Lagerung in Methanol | % | 10 | 39 | 16 | 72 | 36 |
| nach Lagerung in Ethanol | % | 11 | 86 | 54 | 70 | 37 |
| nach Lagerung in 2-Propanol | % | 16 | 92 | 16 | 71 | 37 |
| nach Lagerung in Spiritus | % | 12 | 78 | 55 | 74 | 36 |
| nach Lagerung in E85 | % | 14 | 80 | 39 | 71 | 36 |

| | | | | | | |
|---|---|---|---|---|---|---|
| oB.: ohne Bruch | | | | | | |

Die relative Viskosität (ηᵣₑₗ) wurde bestimmt nach DIN EN ISO 307 an Lösungen von 0,5g Polymer gelöst in 100ml m-Kresol bei einer Temperatur von 20°C.

Die Glasumwandlungstemperatur oder Glasübergangstemperatur (Tg), der Schmelzpunkt (Tₘ) und die Schmelzwärme (Hₘ) wurden bestimmt nach ISO 11357-1/2. Die Differential Scanning Calorimetry (DSC) wurde mit einer Aufheizrate von 20K/min durchgeführt. Zug-E-Modul, Reissfestigkeit und Reissdehnung wurden nach ISO 527 mit einer Zuggeschwindigkeit von 1mm/min (Zug-E-Modul) bzw. 50mm/min (Reissfestigkeit, Reissdehnung) am ISO-Zugstab, Norm: ISO/CD 3167, Typ Al, 170 x 20/10 x 4mm bei Temperatur 23°C bestimmt.

Schlagzähigkeit und Kerbschlagzähigkeit nach Charpy wurden nach ISO 179/keU am ISO-Prüfstab, Norm: ISO/CD 3167, Typ B1, 80 x 10 x 4mm bei einer Temperatur von -30°C und 23°C gemessen.

Lichttransmission (Transparenz) und Haze wurden nach ASTM D 1003 an Platten der Dimension 2 x 60 x 60mm oder an Rundplatten 2 x 70mm bei einer Temperatur von 23°C mit dem Messgerät Haze Gard Plus der Firma Byk Gardner mit der CIE Lichtart C bestimmt. Die Lichttransmissionswerte werden in % der eingestrahlten Lichtmenge angegeben.

Der Glanz (Gloss) wurde nach DIN EN ISO 2813 an einer Rundplatte der Dimension 70 x 2mm bei einer Temperatur von 23°C mit einem Minolta Multi Gloss 268 unter einem Winkel von 20° und 60°gemessen.

Der MVR (Melt Volume Rate) wurde nach ISO 1133 bei 275°C und einer Belastung von 5 kg bestimmt.

Die Fließlängen wurden mittels einer Arburg-Spritzgussmaschine (Typ: ARBURG - ALLROUNDER 320-210-750) bestimmt. Es wurden Fließspiralen der Dimension 1,5mm x 10 mm bei einer Massetemperatur von 250°C und einer Formtemperatur von 40°C angefertigt.

Formteile aus den erfindungsgemässen Polymermischungen besitzen gute mechanische und ausreichende thermische Eigenschaften. Die Transparenz (Transmission) der erfindungsgemässen Formteile ist überragend und liegt über einen weiten Zusammensetzungsbereich der Polymermischungen über den Werten der reinen Komponente (A). So nimmt die Transparenz der Polymermischungen B1 bis B6 Werte von 91 bis 93% an, obwohl nur Komponente (A) als amorphes Copolyamid transparent und Komponente (B) als teilkristallines Polyamid nicht transparent ist.

Auch der Haze von B 1 bis B5 liegt auf hervorragendem Niveau und ist dem Haze von VB1 mindestens ebenbürtig. Für hohe Anteile an Komponente (B) steigt der Haze dann auf Werte von ca. 12 % an. B6 mit einem Gehalt von 70 Gew.-% an (B) erreicht noch einen akzeptablen Haze von ca. 10. Die erfindungsgemässen Formmassen weisen darüber hinaus auch eine gute Chemikalienbeständigkeit, insbesondere gegenüber Alkoholen auf. So nimmt der Haze von B1 bis B6 nicht oder nur geringfügig nach Lagerung in Alkoholen oder in alkoholhaltigem Benzin (E85 enthält 15% Ethanol) zu, während der Haze im Fall von VB1 und VB2 deutlich verschlechtert wird. VB3 und VB4 besitzen bereits ohne Alkoholkontakt unakzeptabel hohe Hazewerte und mit 75 bzw. 82 % eine zu geringe Transparenz.

## Patentansprüche

1. Polyamidformmasse auf Basis einer Mischung aus transparente Copolyamiden und teilkristallinen, aliphatischen Polyamiden zur Herstellung von transparenten Formteilen, wobei die Formmasse enthält:
(A) 25 bis 75 Gew.% mindestens eines transparenten Copolyamids, aufgebaut aus
(a) 50 bis 90 Mol-% eines cycloaliphatischen Diamins ausgewählt aus der Gruppe bestehend aus: Bis-(4-amino-3-methyl-cyclohexyl)-methan (MACM), Bis-(4-amino-cyclohexyl)-methan (PACM), und
(b) 10 bis 50 Mol-% eines unverzweigten, aliphatischen Diamins ausgewählt aus der Gruppe bestehend aus: 1,10-Decandiamin und 1,12-Dodecandiamin oder Mischungen davon,
jeweils bezogen auf die Gesamtmenge an Diaminen sowie
(c) aus einer oder mehreren aliphatischen Dicarbonsäure ausgewählt aus der Gruppe bestehend aus: Sebacinsäure und Dodecandisäure,
(B) 25 bis 75 Gew.-% mindestens eines weiteren Polyamids ausgewählt aus der Gruppe bestehend aus: PA1010, PA1012, PA1212 sowie Mischungen davon,
(C) 0 bis 10 Gew.-% Additive, ausgewählt aus der Gruppe bestehend aus: UV-Stabilisatoren, Hitzestabilisatoren, Radikalfänger, Verarbeitungshilfsstoffe, Einschlussverhinderer, Gleitmittel, Entformungshilfsstoffe, Weichmacher, funktionelle Additiven zur Beeinflussung der optischen Eigenschaften, insbesondere des Brechungsindexes, Schlagzähmodifikatoren, Füll- und/oder Zuschlagsstoffe, optische Aufheller, Farbstoffe oder Mischungen davon,
wobei die Summe der Komponenten (A); (B) und (C) 100 Gew.-% ergibt.

2. Polyamidformmassen gemäß einem der vorhergehenden Ansprüche, **dadurch gekennzeichnet, dass** die Komponente (B) PA1010 ist.

3. Polyamidformmasse gemäß einem der vorhergehenden Ansprüche, **dadurch gekennzeichnet, dass** das weitere Polyamid der Komponente (B) in einem Anteil im Bereich von 30-70 Gew.-% vorliegt, bevorzugt im Bereich von 35-65 Gew.-%, insbesondere bevorzugt im Bereich von 40-65 Gew.%.

4. Polyamidformmasse gemäß einem der vorhergehenden Ansprüche, **dadurch gekennzeichnet, dass** das weitere Polyamid der Komponente (B) eine Lösungsviskosität ηᵣₑₗ, gemessen in einer Lösung von 0.5 g Polymer in 100 ml m-Kresol bei 20 °C, im Bereich von 1.4 bis 2.4, bevorzug von 1.6 bis 2.2 und insbesondere von 1.7 bis 2.0 aufweist.

5. Polyamidformmasse gemäß einem der vorhergehenden Ansprüche, **dadurch gekennzeichnet, dass** die Konzentration der cycloaliphatischen Diamine der Komponente (A) in einem Bereich von 50 bis 80 Mol-%, insbesondere im Bereich von 55 bis 75 Mol-%, bezogen auf den Gesamtdiamingehalt, liegt, und das unverzweigte, aliphatische Diamin in einer Konzentration von 25 bis 40 Mol-%, bezogen auf den Gesamtdiamingehalt, eingesetzt ist.

6. Polyamidformmasse gemäß einem der vorhergehenden Ansprüche, **dadurch gekennzeichnet, dass** die Dicarbonsäure der Komponente (A) zu mindestens 20 Mol-%, bevorzugt zu mindestens 30 Mol-%, insbesondere bevorzugt zu mindestens 50 Mol-%, aus Sebacinsäure, bezogen auf die Gesamtmenge an Dicarbonsäuren, besteht, und wobei besonders bevorzugt die aliphatische Dicarbonsäure ausschließlich Sebacinsäure ist.

7. Polyamidformmasse gemäß einem oder mehreren der Ansprüche 1 bis 6, **dadurch gekennzeichnet, dass** das Copolyamid (A) eine Glasübergangstemperatur von wenigstens 85°C, insbesondere von 90°C bis 135°C, besonders bevorzugt von wenigstens 100°C bis 135°C, aufweist.

8. Polyamidformmasse gemäß einem oder mehreren der Ansprüche 1 bis 7, **dadurch gekennzeichnet, dass** das Copolyamid (A) ausgewählt ist aus der Gruppe bestehend aus: MACM10/1010, Mach12/1012, Pack10/1010, PACM2/1012.

9. Polyamidformmasse gemäß einem oder mehreren der Ansprüche 1 bis 8, **dadurch gekennzeichnet, dass** das Copolyamid (A) MACM10/1010 ist und die Komponente (B) PA1010 ist.

10. Verfahren zur Herstellung einer Polyamidformmasse gemäß einem der Ansprüche 1 bis 9, **dadurch gekennzeichnet, dass** die Herstellung der Polymerkomponenten (A) und (B) in Druckgefäßen erfolgt, mit einer Druckphase bei 250°C bis 320°C mit einer nachfolgenden Entspannung bei 250°C bis 320°C, mit einer nachfolgenden Entgasung bei 260°C bis 320°C sowie Austragen der Polyamidformmassen in Strangform, Abkühlen, Granulieren und Trocknen des Granulats, Compoundieren der Komponenten (A), und (B), und gegebenenfalls (C) als Granulat und Formen in einem Extruder bei Massetemperaturen von 220°C bis 350°C zu einem Strang, Schneiden mit geeigneten Granulatoren zu Pellets, wobei während der Compoundierung Additive zugegeben werden können, die zur Ausrüstung der Formmasse erwünscht sind, wie Verarbeitungsstabilisatoren, Farbpigmente, UV-Absorber, Hitzestabilisatoren, Flammschutzmittel und andere transparente Polyamide.

11. Formteil, erhältlich aus einer Polyamidformmasse gemäß einem der Ansprüche 1 bis 9 mittels Spritzgießverfahren und Spritzprägeverfahren bei Massetemperaturen von 230°C bis 320°C, wobei das Werkzeug mit Temperaturen von 40°C bis 130°C eingestellt wird und wobei gegebenenfalls das Werkzeug mit Temperaturen von 40°C bis 130°C nach dem Füllen der Kavität einen Prägedruck auf das heiße Formteil aufbringt.

12. Formteil gemäß Anspruch 11, **gekennzeichnet durch** eine Lichttransmission, gemessen nach ASTM D 1003, bestimmt an Platten mit einer Dimension 2 x 60 x 60mm oder an Rundplatten der Dimension 2 x 70mm, bei einer Temperatur von 23°C, mit dem Messgerät Haze Gard Plus der Firma Byk Gardner mit der CIE Lichtart C, wobei die Lichttransmission wenigstens 85%, bevorzugt wenigstens 88% und besonders bevorzugt wenigstens 90% beträgt.

13. Formteil gemäß einem oder mehreren der vorhergehenden Ansprüche 11 oder 12, **gekennzeichnet durch** eine Trübung (Haze) nach einstündiger Lagerung in Alkoholen, gemessen nach ASTM D1003, einer aus der transparenten Polyamidformmasse nach den Ansprüchen 1 bis 6 hergestellten Platte mit einer Dicke von 2mm von höchstens 15%, bevorzugt von höchstens 12% und ganz besonders bevorzugt von höchstens 5%.

14. Formteil gemäß einem oder mehreren der vorhergehenden Ansprüche 11 oder 12, **dadurch gekennzeichnet, dass** es sich um ein Gehäuse- oder Displayelement einer Maschine, eines Automobils, eines Haushaltsgerätes, oder eines insbesondere tragbaren elektrischen oder elektronischen Geräts, wie insbesondere eines Mobiltelefons, Computers, Laptops, GPS-Geräts, MP3-Players, Kamera, optischen Geräts oder Kombinationen davon handelt, oder um ein Sportgerät, ein Brillengestell, ein Brillenglas, eine Linse, ein Fernglas, Schaugläser für Heizungstechnik mit direktem Ölkontakt, Filtertassen für Trinkwasseraufbereitung, Babyflaschen, Flaschen für Carbonisierung, Essgeschirr, Durchflussmesser für Gase oder flüssige Medien, Uhrengehäuse, Gehäuse für Armbanduhren, Lampengehäuse und Reflektoren für Autolampen oder Elemente davon.

## Claims

1. Polyamide moulding composition based on a mixture of transparent copolyamides and of semicrystalline, aliphatic polyamides for producing transparent mouldings, where the moulding composition comprises:
(A) from 25 to 75% by weight of at least one transparent copolyamide composed of
(a) from 50 to 90 mol% of a cycloaliphatic diamine selected from the group consisting of: bis(4-amino-3-methylcyclohexyl)methane (MACM), bis(4-aminocyclohexyl)methane (PACM), and
(b) from 10 to 50 mol% of an unbranched, aliphatic diamine selected from the group consisting of 1,10-decandiamine, 1,12-dodecandiamine or mixtures thereof,
based in each case on the total amount of diamines, and also
(c) of one or more aliphatic and cycloaliphatic dicarboxylic acid(s) selected from the group consisting of: sebacic acid, dodecanedioic acid,
(B) from 25 to 75% by weight of at least one further polyamide selected from the group consisting of: PA1010, PA1012, PA1212,
(C) from 0 to 10% by weight of additives selected from the group consisting of: UV stabilizers, heat stabilizers, free-radical scavengers, processing aids, inclusion inhibitors, lubricants, mould-release auxiliaries, plasticizers, functional additives for influencing optical properties, in particular refractive index, impact modifiers, fillers and/or aggregates, optical brighteners, dyes and mixtures thereof,
where the entirety of components (A), (B) and (C) gives 100% by weight.

2. Polyamide moulding compositions according to any of the preceding claims, **characterized in that** component (B) is PA1010.

3. Polyamide moulding composition according to any of the preceding claims, **characterized in that** the proportion present of the further polyamide of component (B) is in the range from 30-70% by weight, preferably in the range from 35-65% by weight, with particular preference in the range from 40-65% by weight.

4. Polyamide moulding composition according to any of the preceding claims, **characterized in that** the solution viscosity ηᵣₑₗ of the further polyamide of component (B), measured on a solution of 0.5 g of polymer in 100 ml of m-cresol at 20°C, is in the range from 1.4 to 2.4, preferably from 1.6 to 2.2 and in particular from 1.7 to 2.0.

5. Polyamide moulding composition according to any of the preceding claims, **characterized in that** the concentration of the cycloaliphatic diamines of component (A) is in the range from 50 to 80 mol%, in particular in the range from 55 to 75 mol%, based on total diamine content, and the concentration used of the unbranched, aliphatic diamine is from 25 to 40 mol%, based on total diamine content.

6. Polyamide moulding composition according to any of the preceding claims, **characterized in that** the dicarboxylic acid iscomposed of at least 20 mol%, preferably at least 30 mol%, with particular preference at least 50 mol%, of sebacic acid, based on the total amount of dicarboxylic acids, and where the aliphatic dicarboxylic acid is particularly preferably exclusively sebacic acid.

7. Polyamide moulding composition according to one or more of Claims 1 to 6, **characterized in that** the glass transition temperature of the copolyamide (A) is at least 85°C, in particular from 90°C to 135°C, particularly preferably at least 100°C to 135°C.

8. Polyamide moulding composition according to one or more of Claims 1 to 7, **characterized in that** the copolyamide (A) has been selected from the group consisting of: MACM10/1010, MACM12/1012, MACM14/1014, PACM10/1010, PACM12/1012.

9. Polyamide moulding composition according to one or more of Claims 1 to 8, **characterized in that** the copolyamide (A) is MACM10/1010 and component (B) is PA1010.

10. Process for producing a polyamide moulding composition according to any of Claims 1 to 9, **characterized in that** polymer components (A) and (B) are produced in pressure vessels with a pressure phase at from 250°C to 320°C with subsequent depressurization at from 250°C to 320°C, with subsequent devolatilization at from 260°C to 320°C, and discharge of the polyamide moulding compositions in strand form, cooling, pelletization and drying of the pellets, compounding of components (A) and (B), and optionally (C) in the form of pellets and moulding in an extruder at melt temperatures from 220°C to 350°C to give a strand, cutting by suitable pelletizers to give pellets, where additives can be added during the compounding process, where these are desirable for providing properties to the moulding composition, examples being processing stabilizers, colour pigments, UV absorbers, heat stabilizers, flame retardants and other transparent polyamides.

11. Moulding obtainable from a polyamide moulding composition according to any of Claims 1 to 9 by means of injection moulding processes and injection compression moulding processes at melt temperatures from 230°C to 320°C, where the mould is adjusted to temperatures from 40°C to 130°C and where, if appropriate, the mould at temperatures from 40°C to 130°C exerts compression on the hot moulding after material has been charged to the cavity.

12. Moulding according to Claim 11, **characterized by** light transmittance of at least 85%, preferably at least 88% and particularly preferably at least 90%, measured to ASTM D1003, determined on plaques measuring 2 × 60 × 60 mm or on discs measuring 2 × 70 mm, at a temperature of 23°C, with haze-gard plus test equipment from Byk Gardner with CIE illuminant C.

13. Moulding according to one or more of the preceding Claims 11 and 12, **characterized in that** the haze of a plaque of thickness 2 mm produced from the transparent polyamide moulding composition according to Claims 1 to 5 after one hour of ageing in alcohols, measured to ASTM D1003, is at most 15%, preferably at most 12% and very particularly preferably at most 5%.

14. Moulding according to one or more of the preceding Claims 11 and 12, **characterized in that** it concerns an element for the casing or display of a machine, of an automobile, of household equipment, or of in particular portable electrical or electronic equipment, for example in particular of a mobile phone, computer, laptop, GPS device, MP3 player, camera, optical device or a combination thereof, or concerns sports equipment, a spectacle frame, a spectacle lens or other lens, a binocular, inspection windows for technical heating equipment with direct contact with oil, filter cups for treatment of drinking water, baby bottles, bottles for carbonation, crockery, flow meters for gases or liquids, clock casings, casings for wristwatches, lamp casings or reflectors for automobile lamps or elements thereof.

## Revendications

1. Masse de moulage en polyamide à base d'un mélange de copolyamides transparents et de polyamides aliphatiques, partiellement cristallins pour la préparation de pièces moulées transparentes, la masse de moulage contenant :
(A) 25 à 75% en poids d'au moins un copolyamide transparent, constitué par
(a) 50 à 90% en mole d'une diamine cycloaliphatique choisie dans le groupe constitué par : le bis-(4-amino-3- méthylcyclohexyl)-méthane (MACM), le bis-(4-aminocyclohexyl)-méthane (PACM), et
(b) 10 à 50% en mole d'une diamine aliphatique, non ramifiée, choisie dans le groupe constitué par : la 1,10-décanediamine et la 1,12-dodécanediamine ou leurs mélanges,
à chaque fois par rapport à la quantité totale de diamines, ainsi que
(c) un ou plusieurs acides dicarboxyliques aliphatiques, choisis dans le groupe constitué par : l'acide sébacique et l'acide dodécanedioïque,
(B) 25 à 75% en poids d'au moins un autre polyamide choisi dans le groupe constitué par : le PA1010, le PA1012, le PA1212 ainsi que les mélanges de ceux-ci,
(C) 0 à 10% en poids d'additifs, choisis dans le groupe constitué par : les stabilisants des UV, les stabilisants thermiques, les pièges de radicaux, les adjuvants de transformation, les inhibiteurs d'inclusions, les lubrifiants, les adjuvants de démoulage, les plastifiants, les additifs fonctionnels pour influencer les propriétés optiques, en particulier l'indice de réfraction, les agents de modification de la résilience, les charges et/ou les agrégats, les azurants optiques, les colorants ou les mélanges de ceux-ci,
la somme des composants (A), (B) et (C) valant 100% en poids.

2. Masses de moulage en polyamide selon l'une quelconque des revendications précédentes, **caractérisées en ce que** le composant (B) est le PA1010.

3. Masse de moulage en polyamide selon l'une quelconque des revendications précédentes, **caractérisée en ce que** l'autre polyamide du composant (B) se trouve en une proportion dans la plage de 30-70% en poids, de préférence dans la plage de 35-65% en poids, en particulier de préférence dans la plage de 40-65% en poids.

4. Masse de moulage en polyamide selon l'une quelconque des revendications précédentes, **caractérisée en ce que** l'autre polyamide du composant (B) présente une viscosité en solution ηᵣₑₗ, mesurée dans une solution de 0,5 g de polymère dans 100 ml de m-crésol à 20°C, dans la plage de 1,4 à 2,4, de préférence de 1,6 à 2,2 et en particulier de 1,7 à 2,0.

5. Masse de moulage en polyamide selon l'une quelconque des revendications précédentes, **caractérisée en ce que** la concentration en diamines cycloaliphatiques du composant (A) se situe dans une plage de 50 à 80% en mole, en particulier dans la plage de 55 à 75% en mole, par rapport à la teneur totale en diamines et la diamine aliphatique, non ramifiée est utilisée en une concentration de 25 à 40% en mole, par rapport à la teneur totale en diamines.

6. Masse de moulage en polyamide selon l'une quelconque des revendications précédentes, **caractérisée en ce que** l'acide dicarboxylique du composant (A) est constitué à raison d'au moins 20% en mole, de préférence d'au moins 30% en mole, en particulier de préférence d'au moins 50% en mole, d'acide sébacique, par rapport à la quantité totale d'acides dicarboxyliques, et l'acide dicarboxylique étant de manière particulièrement préférée exclusivement de l'acide sébacique.

7. Masse de moulage en polyamide selon l'une ou plusieurs des revendications 1 à 6, **caractérisée en ce que** le copolyamide (A) présente une température de transition vitreuse d'au moins 85°C, en particulier de 90°C à 135°C, de manière particulièrement préférée d'au moins 100°C à 135°C.

8. Masse de moulage en polyamide selon l'une ou plusieurs des revendications 1 à 7, **caractérisée en ce que** le copolyamide (A) est choisi dans le groupe constitué par MACM10/1010, MACM12/1012, PACM10/1010 et PACM12/1012.

9. Masse de moulage en polyamide selon l'une ou plusieurs des revendications 1 à 8, **caractérisée en ce que** le copolyamide (A) est le MACM10/1010 et le composant (B) est le PA1010.

10. Procédé pour la préparation d'une masse de moulage en polyamide selon l'une quelconque des revendications 1 à 9, **caractérisé en ce que** la préparation des composants polymères (A) et (B) a lieu dans des récipients sous pression, par une phase sous pression à 250°C jusqu'à 320°C, suivie d'une détente consécutive à 250°C jusqu'à 320°C, d'un dégazage consécutif à 260°C jusqu'à 320°C ainsi qu'une évacuation des masses de moulage en polyamide sous forme de brin, refroidissement, granulation et séchage du granulat, compoundage des composants (A), (B) et le cas échéant (C) sous forme de granulat et moulage dans une extrudeuse à des températures de la masse de 220°C à 350°C en un brin, découpe avec des granulateurs appropriés en pellets, des additifs pouvant être ajoutés pendant le compoundage, qui sont souhaités pour l'apprêt de la masse de moulage, tels que des stabilisants de transformation, des pigments colorés, des absorbants des UV, des stabilisants thermiques, des agents ignifuges et d'autres polyamides transparents.

11. Pièce moulée, pouvant être obtenue à partir d'une masse de moulage en polyamide selon l'une quelconque des revendications 1 à 9 par un procédé de moulage par injection et un procédé d'estampage par injection à des températures de la masse de 230°C à 320°C, l'outil étant réglé à des températures de 40°C à 130°C et l'outil, à des températures de 40°C à 130°C, appliquant le cas échéant, après le remplissage de la cavité, une pression d'estampage sur la pièce moulée chaude.

12. Pièce moulée selon la revendication 11, **caractérisée par** une transmission de la lumière mesurée selon la norme ASTM D1003, déterminée sur des plaques présentant une dimension de 2 x 60 x 60 mm ou sur des plaques rondes de dimension 2 x 70 mm, à une température de 23°C, avec l'appareil de mesure Haze Gard Plus de la société Byk Gardner avec le type de lumière CIE C, la transmission de la lumière étant d'au moins 85%, de préférence d'au moins 88% et de manière particulièrement préférée d'au moins 90%.

13. Pièce moulée selon l'une ou plusieurs des revendications précédentes 11 ou 12, **caractérisée par** un trouble (voile) après un entreposage pendant une heure dans des alcools, mesuré selon la norme ASTM D1003, sur une plaque préparée à partir de la masse de moulage en polyamide transparente selon les revendications 1 à 6 d'une épaisseur de 2 mm, d'au plus 15%, de préférence d'au plus 12% et de manière tout particulièrement préférée d'au plus 5%.

14. Pièce moulée selon l'une ou plusieurs des revendications précédentes 11 ou 12, **caractérisée en ce qu'**il s'agit d'un élément de boîtier ou d'affichage d'une machine, d'une automobile, d'un appareil domestique ou d'un appareil électrique ou électronique en particulier portable, comme en particulier d'un téléphone portable, d'un ordinateur, d'un ordinateur portable, d'un appareil GPS, d'un lecteur MP3, d'une caméra, d'un appareil optique ou de combinaisons de ceux-ci, ou d'un appareil de sport, d'un verre de lunette, d'une lentille, de jumelles, d'un verre de regard pour la technique de chauffage avec un contact direct avec de l'huile, de cartouches de filtration pour la préparation de l'eau potable, de biberons, de flacons pour la carbonisation, de gamelles, de débitmètres pour des gaz ou des milieux liquides, des boîtiers d'horloges, des boîtiers de montres-bracelets, de boîtiers pour lampes et de réflecteurs pour lampes de voitures ou leurs éléments.
